# EUROPÄISCHE PATENTSCHRIFT

(11) **EP 1 886 047 B1**
(45) Veröffentlichungstag und Bekanntmachung des Hinweises auf die Patenterteilung: **21.04.2010**
(21) Anmeldenummer: 06704280.4
(22) Anmeldetag: 04.02.2006
(51) Int. Cl.: F16H 48/00, F16H 48/10

(54) **DIFFERENTIALANORDNUNG MIT MONTAGEÖFFNUNGEN**
DIFFERENTIAL ARRANGEMENT WITH ASSEMBLY OPENINGS
SYSTEME DIFFERENTIEL A OUVERTURES DE MONTAGE

(30) Priorität: 24.05.2005 DE 102005024452
(43) Veröffentlichungstag der Anmeldung: 13.02.2008
(73) Patentinhaber: GKN Driveline International GmbH, 53797 Lohmar (DE)
(72) Erfinder: KRUDE, Werner, 53819 Neunkirchen-Seelscheid (DE); LEUSCHEN, Ralf, 54578 Oberbettingen (DE); CONSTANTIN, Bernd, 40593 Düsseldorf (DE)
(74) Vertreter: Oberwalleney, Stephan
(86) Internationale Anmeldenummer: PCT/EP2006/000978
(87) Internationale Veröffentlichungsnummer: WO 2006/125478

(56) Entgegenhaltungen:
- EP-A- 1 433 978
- DE-A1- 10 125 793
- DE-A1- 19 820 206

## Beschreibung

Die Erfindung betrifft eine Differentialanordnung, die Teil eines Differentialgetriebes ist und insbesondere zum Einsatz im Antriebsstrang eines Kraftfahrzeugs dient. Derartige Differentialanordnungen sind hinreichend bekannt. Sie umfassen üblicherweise einen Differentialkorb, der um eine Drehachse drehend antreibbar ist, zwei Seitenwellenräder, die in dem Differentialkorb drehbar gehalten sind und zur Drehmomentübertragung auf zwei Seitenwellen dienen, sowie mehrere Ausgleichsräder, die gemeinsam mit dem Differentialkorb umlaufen und mit den Seitenwellenrädern in Verzahnungseingriff sind.

Aus den Dokumenten DE 198 20 206 A1 (gattungsgemäße Dokument), US 2 865 229, US 5 620 388 und DE 100 09 961 A1 sind Differentialanordnungen bekannt, die einen einstückigen Differentialkorb mit radialen Öffnungen zur Montage der Seitenwellenräder und der Ausgleichsräder aufweisen. In allen drei Fällen sind die Differentialanordnungen in Form von Kegelraddifferentialen gestaltet, wobei die Ausgleichsräder und die Seitenwellenräder als Kegelräder gestaltet sind. Die Ausgleichsräder haben im Verhältnis zu den Seitenwellenrädern einen relativ großen Durchmesser, so daß die Kegelraddifferentiale insgesamt eine große axiale Baulänge aufweisen.

Aus der EP 1 433 978 A1 ist eine Differentialanordnung in Form eines Kegelraddifferentials mit einem einstückigen Differentialkorb bekannt, der insgesamt drei Montageöffnungen aufweist. Dabei sind zwei der drei Montageöffnungen zum Einfädeln der Ausgleichsräder während die dritte Öffnung zur Montage der beiden Seitenwellenräder vorgesehen ist. Die dritte Montageöffnung hat eine weitestgehend fünfeckige Form, die zur Drehachse unsymmetrisch ist, um ein Einfädeln der Seitenwellenräder unter winkliger Anstellung gegenüber der Drehachse zu ermöglichen. Durch das winklige Anstellen der dritten Montageöffnung ist die Masse des Differentialkorbs ungleich verteilt, so daß es zu Unwuchten kommt. Problematisch ist im allgemeinen, daß die Montageöffnungen und die Bohrungen zur Lagerung der Zapfen die Steifigkeit und die Festigkeit des Differentialkorbs deutlich reduzieren.

Die US 5 951 431 zeigt eine weitere Differentialanordnung als Kegelraddifferential mit einem einstückigen Differentialkorb. Der Differentialkorb hat zur Montage der Seitenwellenräder und der Ausgleichsräder zwei einander diametral gegenüberliegende Öffnungen, die in Radialansicht linsenförmig gestaltet sind. Die Öffnungen haben eine größte Diagonale, die mit der Längsmittelebene der Differentialanordnung einen Winkel einschließt. So können die Seitenwellenräder in einer gegenüber der Drehachse winkligen Position durch die Montageöffnung eingeführt werden.

Aus der US 5 234 388 ist eine Differentialanordnung mit einstückigem Differentialkorb bekannt. Der Differentialkorb hat zwei einander gegenüberliegende Montageöffnungen, die in Radialansicht im wesentlichen kreisförmig gestaltet sind und flanschseitig eine Abflachung mit einer zentralen konkaven Ausnehmung aufweisen.

Aus der DE 103 08 800 A1 ist ein Kronenraddifferential mit einem dreiteiligen Differentialkorb bekannt. Die als Kronenräder gestalteten Seitenwellenräder werden axial montiert. Im Mittelteil des Differentialkorbs sind umfangsverteilte Öffnungen vorgesehen, durch welche die Ausgleichsräder montiert werden.

Aus der DE 101 25 793 A1 ist ein Differentialgetriebe bekannt, bei dem die Achswellenräder mit dem Außenteil jeweils eines Gleichlaufgelenks drehfest verbunden sind.
Die Achswellenräder sind als Kronenräder und die Ausgleichsräder als Stirnräder ausgebildet. Die Montage erfolgt axial von einem Ende des Differentialkorbs her.

Der vorliegenden Erfindung liegt die Aufgabe zugrunde, eine einstückige Differentialanordnung vorzuschlagen, die eine hohe Festigkeit und Verdrehsteifigkeit aufweist, besonders kompakt aufgebaut ist und ein geringes Gewicht hat.

Diese Aufgabe wird erfindungsgemäß durch eine Differentialanordnung in Form eines Kronenraddifferentials, insbesondere für den Einsatz im Antriebsstrang eines Kraftfahrzeugs, gelöst, umfassend
einen einteiligen Differentialkorb, der um eine Drehachse A drehend antreibbar ist und in einem Mantelabschnitt genau zwei gleiche Öffnungen zur Montage von Seitenwellenrädern und Ausgleichsrädern aufweist, wobei die Seitenwellenräder als Kronenräder gestaltet sind und im montierten Zustand im Differentialkorb auf der Drehachse A drehbar gehalten sind und wobei die Ausgleichsräder als Stirnräder gestaltet sind und gemeinsam mit dem Differentialkorb um die Drehachse A umlaufen und mit den Seitenwellenrädern in Verzahnungseingriff sind; wobei die Öffnungen in Bezug auf eine Längsmittelebene jeweils spiegelsymmetrisch gestaltet sind und eine axiale Länge L1 haben, die zumindest dem Durchmesser der Ausgleichsräder entspricht und eine größte Umfangserstreckung L2 in Radialansicht haben, die zumindest einer kleinsten Außendiagonalen der Seitenwellenräder entspricht; wobei die Öffnungen in Bezug auf eine durch die Drehachse der Ausgleichsräder (13) und senkrecht zur Drehachse A aufgespannte Querschnittsebene unsymmetrisch gestaltet sind.

Die Ausgestaltung der Differentialanordnung in Form eines Kronenraddifferentials hat den Vorteil einer kompakten Bauweise und damit eines geringen Gewichts. Außerdem ergibt sich eine kurze axiale Länge der Montageöffnungen durch die als Stirnräder gestalteten Ausgleichsräder. Durch Verwendung von lediglich zwei Öffnungen haben die in Umfangsrichtung zwischen den Öffnungen gebildeten Stege eine relativ große Erstreckung, so daß der Differentialkorb eine hohe Verdrehsteifigkeit und Festigkeit bei gleichzeitig geringer Baugröße aufweist. Um unerwünschte Unwuchten zu vermeiden, sind die beiden Öffnungen gleich gestaltet und zur Längsmittelebene spiegelsymmetrisch. Prinzipiell ist auch die Verwendung von lediglich einer einzigen Öffnung denkbar, durch die die Seitenwellenräder und die Ausgleichsräder in den Differentialkorb eingeführt werden. Der Differentialkorb ist einstückig, insbesondere als Gußteil, hergestellt und hat angeformte Hülsenansätze zur Lagerung in einem stehenden Gehäuse. Mit einstückig ist gemeint, daß der Differentialkorb zur Montage der Räder nicht in mehrere Einzelteile zerlegbar ist, wie es bei mehrteiligen Differentialkörben der Fall ist. Die einstückige Form bietet den Vorteil einer hohen Steifigkeit sowie einer geringen Teilezahl, was sich günstig auf die Herstellungskosten auswirkt.

Nach einer bevorzugten Ausgestaltung entspricht die axiale Länge L1 der Öffnungen höchstens dem 1,1-fachen des Durchmessers D2 der Ausgleichsräder, und die größte Umfangserstreckung L2 in Radialansicht entspricht höchstens dem 1,1-fachen Durchmesser D1 der Seitenwellenräder. Dies hat den Vorteil besonders kleiner Montageöffnungen und damit einer hohen Steifigkeit des Differentialkorbs. Durch Wahl der axialen Länge L1 der Öffnungen entsprechend dem Nenndurchmesser D2 der Ausgleichsräder und durch Wahl der Umfangserstreckung L2 der Öffnungen entsprechend dem Nenndurchmessern D1 der Seitenwellenräder kann die Größe der Öffnungen minimiert werden. Dabei wird das Einführen der Räder durch entsprechende Wahl geeigneter Toleranzen ermöglicht, welche etwa 3% bis 5% der Nennmaße betragen können. Die Seitenwellenräder können radial außen zwei einander entgegengesetzt gerichtete parallele Abflachungen haben, so daß - in Radialprojektion betrachtet - eine gegenüber dem größten Außendurchmesser reduzierte Außendiagonale erzeugt wird. So kann die Umfangserstreckung der Öffnungen sogar kleiner sein als der Nenndurchmesser der Seitenwellenräder. Hierdurch wird die Größe der Öffnungen minimiert und die Steifigkeit des Differentialkorbs maximiert.

Nach einer bevorzugten Ausgestaltung sind die Öffnungen derart gestaltet, daß die Seitenwellenräder mit ihren jeweiligen Achsen etwa parallel zur Drehachse ausgerichtet in den Differentialkorb eingesetzt werden können. Weiterhin sind die Öffnungen nach einer bevorzugten Ausgestaltung derart gestaltet, daß die Ausgleichsräder mit ihren jeweiligen Achsen etwa senkrecht zur Drehachse ausgerichtet in den Differentialkorb eingesetzt werden können. Die beiden Öffnungen sind jeweils in Bezug auf eine Querschnittsebene, die senkrecht auf der Drehachse steht, unsymmetrisch gestaltet. Durch diese Maßnahme kann die Größe der Öffnungen und damit auch die Materialschwächung minimiert werden. Dies wirkt sich günstig auf die Verdrehsteifigkeit und Festigkeit des Differentialkorbs aus. Vorzugsweise ist die Breite der Öffnungen in Umfangsrichtung jeweils größer als deren axiale Länge.

Nach einer bevorzugten Ausgestaltung sind die Öffnungen jeweils in Form eines Vielecks, insbesondere mit abgerundeten Ecken, gestaltet. Für eine hohe Steifigkeit des Differentialkorbs ist es besonders günstig, wenn die Öffnungen als Fünfeck mit abgerundeten Ecken gestaltet sind. Dabei ist es vorteilhaft, Übergangsbereiche zwischen im wesentlichen geraden Teilflächen durch Radien zu bilden, um Spannungen zu minimieren. Dies beinhaltet eine Ausgestaltung, bei der auch die Teilflächen des Fünfecks selbst durch Radien gebildet sind. In Konkretisierung hat das Fünfeck in Radialansicht eine Basisfläche, zwei im wesentlichen parallel zur Drehachse verlaufende Seitenflächen und zwei gegenüber der Drehachse winklig angestellte Stirnflächen. Dabei wird der Übergangsbereich zwischen den Stirnflächen durch einen ersten Radius gebildet, der vorzugsweise etwa dem Radius der Ausgleichsräder entspricht oder größer als dieser ist. Das bedeutet, daß der erste Radius unter Berücksichtigung der Fertigungstoleranzen der Ausgleichsräder und des Differentialkorbs vorzugsweise so groß gewählt ist, daß die Ausgleichsräder gerade in die Öffnungen eingeführt werden können. Weiterhin werden die Übergangsbereiche zwischen den Stirnflächen und den Seitenflächen durch zweite Radien gebildet, die vorzugsweise etwa dem Radius der Ausgleichsräder entsprechen oder kleiner als dieser sind. So wird vorteilhaft erreicht, daß viel Material im Bereich der Stirnflächen vorhanden ist, was die Steifigkeit des Differentialkorbs erhöht. Die Übergangsbereiche zwischen den Seitenflächen und der Basisfläche werden durch dritte Radien gebildet, die vorzugsweise kleiner sind als die zweiten Radien zwischen den Seitenflächen und der Basisfläche. Hierdurch ergibt sich eine kurze axiale Länge der Öffnungen. Insgesamt wird durch die Wahl der Radien in der genannten Form erreicht, daß die Spannungen im Differentialkorb bei Drehmomentübertragung minimiert sind, was sich positiv auf die Lebensdauer auswirkt. Der Differentialkorb hat einen Flansch zur Drehmomenteinteitung, wobei die Basisflächen der beiden Öffnungen vorzugsweise axial benachbart zum Flansch angeordnet sind. Diese Anordnung ist im Hinblick auf eine hohe Steifigkeit günstig, da der durch die winkligen Stirnflächen verjüngte Abschnitt der Öffnungen im Bereich eines konischen Differentialkorbabschnitts angeordnet ist.

Nach einer bevorzugten Ausgestaltung sind genau zwei gleiche Öffnungen vorgesehen, die um 180° umfangsversetzt zueinander angeordnet sind. Dies ist im Hinblick auf eine gleichmäßige Masseverteilung und eine daraus resultierende geringe Unwucht günstig. In Konkretisierung hat der Differentialkorb in den in Umfangsrichtung zwischen den beiden Öffnungen gebildeten Stegen radiale Durchbrüche zur Aufnahme eines Zapfens. Dieser steht senkrecht auf der Längsmittelebene durch die Öffnungen. Vorzugsweise sind genau zwei Ausgleichsräder vorgesehen, die auf einem gemeinsamen Zapfen gelagert sind, der in die Durchbrüche eingesteckt ist. So ist die Anzahl der Teile minimiert, was sich positiv auf die Fertigungs- und Montagekosten auswirkt. Prinzipiell ist jedoch auch die Verwendung von mehr als zwei, insbesondere von vier Ausgleichsrädern, denkbar.

Der Ablauf der Montageschritte ist wie folgt. Zuerst wird das dem Flansch entfernt liegende Seitenwellenrad durch die Öffnung in den Differentialkorb eingeführt und axial verschoben, bis es in seiner Endposition mit einer Anlagefläche des Differentialkorbs in Anlage ist. Anschließend wird das zum Flansch benachbart liegende Seitenwellenrad durch die Öffnung eingeführt und axial bis an seine Endposition, in der es gegen die zugehörige Anlagefläche im Differentialkorb abgestützt ist, verschoben. In einem nächsten Schritt werden die beiden Ausgleichsräder durch die Öffnungen eingeführt und jeweils in Verzahnungseingriff mit den beiden Seitenwellenrädern gebracht. Dann wird der Rädersatz bestehend aus Ausgleichsrädern und Seitenwellenrädern um 90° um die Drehachse gegenüber dem Differentialkorb verdreht, so daß die Bohrungen der Ausgleichsräder mit den radialen Durchbrüchen in den Stegen fluchten. Anschließend wird der Zapfen in die radialen Durchbrüche eingesteckt, um die beiden Ausgleichsräder zu tragen. Zuletzt werden die Ausgleichsräder gegenüber dem Zapfen und der Zapfen gegenüber dem Differentialkorb axial gesichert.

Bevorzugte Ausführungsbeispiele der erfindungsgemäßen Differentialanordnung werden im folgenden anhand der Zeichnung beschrieben. Hierin zeigt
- Figur 1: eine erfindungsgemäße Differentialanordnung in einer ersten Ausführungsform mit Montageöffnungen mit abgerundeten Seitenflächen;
- Figur 2: eine erfindungsgemäße Differentialanordnung in einer zweiten Ausführungsform mit Montageöffnungen mit geraden Seitenflächen
a) als Darstellung des theoretischen Prinzips zur Form der Öffnungen;
b) als Darstellung der praktischen Ausführungsform;
- Figur 3: den Differentialkorb aus Figur 2 im Längsschnitt durch die radialen Durchbrüche;
- Figur 4: den Differentialkorb aus Figur 2 im Längsschnitt durch die Montageöffnungen;
- Figur 5: den Differentialkorb aus Figur 2 in perspektivischer Ansicht;
- Figur 6: die Montageabfolge der Differentialanordnung aus Figur 2 mit den Schritten
a) Einsetzen des ersten Seitenwellenrads;
b) Einsetzen des zweiten Seitenwellenrads;
c) Einsetzen der Ausgleichsräder;
- Figur 7: die Differentialanordnung aus Figur 6 im Längsschnitt durch die Zapfenachse im fertig montierten Zustand;

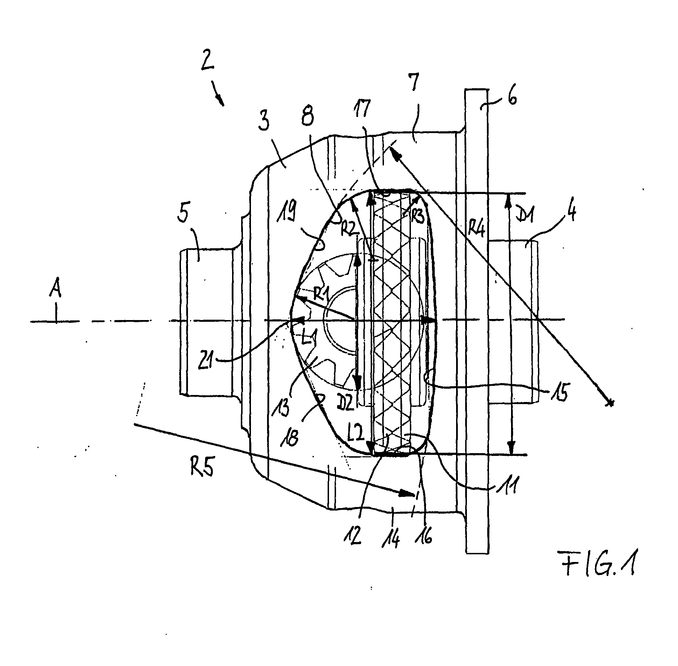

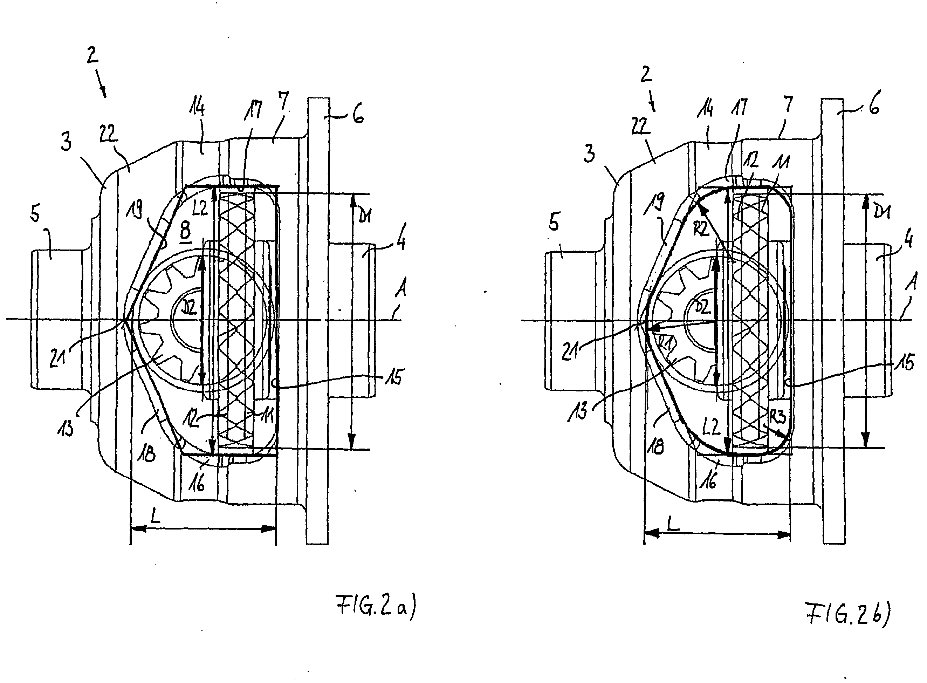

Die in den Figuren 1 und 2 gezeigten Differentialanordnungen 2 entsprechen hinsichtlich ihres Aufbaus und ihrer Funktionsweise einander weitestgehend und werden daher im folgenden gemeinsam beschrieben. Gleiche Bauteile sind mit gleichen Bezugsziffern versehen. Es ist eine Differentialanordnung 2 mit einem einteiligen Differentialkorb 3 gezeigt, der in einem nicht dargestellten stehenden Gehäuse zu lagern ist. Hierfür sind an dem Differentialkorb 3 in entgegengesetzte Richtung weisende hülsenförmige Lageransätze 4, 5 angeformt, die zur Aufnahme von hier nicht dargestellten Wälzlagern dienen. Die Differentialanordnung 2 ist Teil eines Differentialgetriebes im Antriebsstrang eines Kraftfahrzeugs und dient zur Drehmomentübertragung von einer nicht dargestellten Längsantriebswelle auf zwei Seitenwellen. Hierfür ist an den Differentialkorb 3 ein Flansch 6 angeformt, an dem ein nicht dargestelltes Tellerrad zum Einleiten des Drehmoments in die Differentialanordnung 2 befestigt werden kann.

Der einteilige Differentialkorb 3 hat einen Mantelabschnitt 7, in dem zwei um 180° um die Drehachse A versetzt angeordnete radiale Öffnungen 8 zur Montage von zwei Seitenwellenrädern 11, 12 und mehreren Ausgleichsrädern 13 vorgesehen sind. Die beiden Öffnungen 8, von denen in der vorliegenden Radialansicht nur eine sichtbar ist, sind gleich gestaltet. Im folgenden beispielhaft nur eine der beiden Öffnungen 8 beschrieben. Vorliegend sind die Seitenwellenräder 11, 12 und eines der Ausgleichsräder 13 überlappend in einer gedachten Position dargestellt, um die Größenverhältnisse zu veranschaulichen. Um die Materialschwächung im Bereich der in Umfangsrichtung zwischen den Öffnungen 8 gebildeten Stegen 14 gering zu halten, ist jede der Öffnungen 8 unter Berücksichtigung der üblichen Fertigungstoleranzen gerade groß genug, um die Seitenwellenräder 11, 12 und die Ausgleichsräder 13 einzuführen. Es ist ersichtlich, daß die Breite L2 der Öffnung 8 in Umfangsrichtung, in Radialprojektion betrachtet, größer ist als der größte Durchmesser D1 der Seitenwellenräder 11, 12 und vorzugsweise kleiner ist als das 1,1-fache des Durchmessers D1 der Seitenwellenräder. So können die Seitenwellenräder 11, 12 mit ihren jeweiligen Achsen etwa parallel zur Drehachse A ausgerichtet ohne seitliches Verkippen in den Differentialkorb 3 eingeführt werden. Ferner ist die axiale Länge L1 der Öffnung 8 größer als der größte Durchmesser D2 der Ausgleichsräder 13 und vorzugsweise kleiner als das 1,1-fache des Durchmessers D2 der Ausgleichsräder. Dies ermöglicht, daß die Ausgleichsräder 13 mit ihren jeweiligen Achsen etwa senkrecht zur Drehachse A ausgerichtet ohne Verkippen in den Differentialkorb 3 eingeführt werden können.

Um die Materialschwächung gering zu halten, hat die Öffnung 8 eine etwa fünfeckige Form und bildet eine axial benachbart zum Flansch 6 liegende Basisfläche 15, zwei daran anschließende und etwa parallel zur Drehachse verlaufende Seitenflächen 16, 17 sowie zwei daran anschließende zur Drehachse winklig angestellte Stirnflächen 18, 19, die sich in einem auf der Drehachse A liegenden Scheitel 21 treffen. Es ist ersichtlich, daß die Öffnung 8 in bezug auf die Drehachse A spiegelsymmetrisch gestaltet ist. So werden aufgrund ungleicher Masseverteilung entstehende Unwuchten ausgeschlossen. Um die Spannungen im Differentialkorb 3 bei der Drehmomentübertragung gering zu hatten sind die zwischen zwei Flächen liegenden Übergangsbereiche durch möglichst große Radien gebildet. Es ist ersichtlich, daß der Radius R1, der die beiden Stirnflächen 18, 19 miteinander verbindet, größer ist als die Radien der Ausgleichsräder 13. Dabei liegt der Mittelpunkt des Radius R1 etwa in einer zur Drehachse senkrechten Querschnittsebene durch die Ausgleichsräder 13. Die Radien R2 zwischen den Stirnflächen 18, 19 und den Seitenflächen 16, 17 entsprechen - unter Berücksichtung von üblichen Toleranzen - maximal den Radien der Ausgleichsräder 13. Demgegenüber sind die Radien R3 zwischen den Seitenflächen 16, 17 und der Basisfläche 15 kleiner gewählt.

In der Ausführungsform nach Figur 1 sind auch die Basisfläche 15, die Seitenflächen 16, 17 und die Stirnflächen 18, 19 abgerundet und durch große Radien R4, R5 gebildet. So werden die bei Drehmomentübertragung im Differentialkorb 3 entstehenden Spannungen minimiert. Demgegenüber sind die besagten Flächen bei der Ausführungsform nach Figur 2 in Radialansicht weitestgehend gerade gestaltet. Dies ist besonders gut in Figur 2a) ersichtlich. Dort ist ein spiegelsymmetrisches Fünfeck, das als theoretischer Ausgangspunkt für die Form der Öffnung 8 dient, durch eine dicke Linie eingezeichnet. In Figur 2b) ist dieselbe Differentialanordnung dargestellt, bei der die tatsächliche Form der Öffnung 8 mit einer dicken Linie gekennzeichnet ist. Die Seitenflächen 16, 17 sind gegenüber Längsmittelebene durch die Öffnung winklig angestellt. Die Stirnflächen 18, 19 sind durch den konischen Abschnitt 22 des Differentialkorbs 3 abgeschrägt.

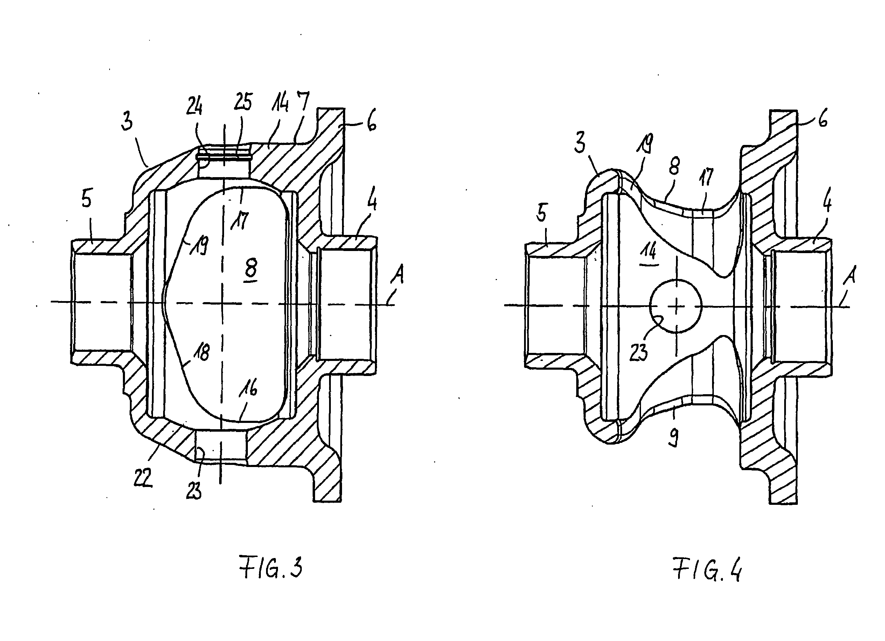

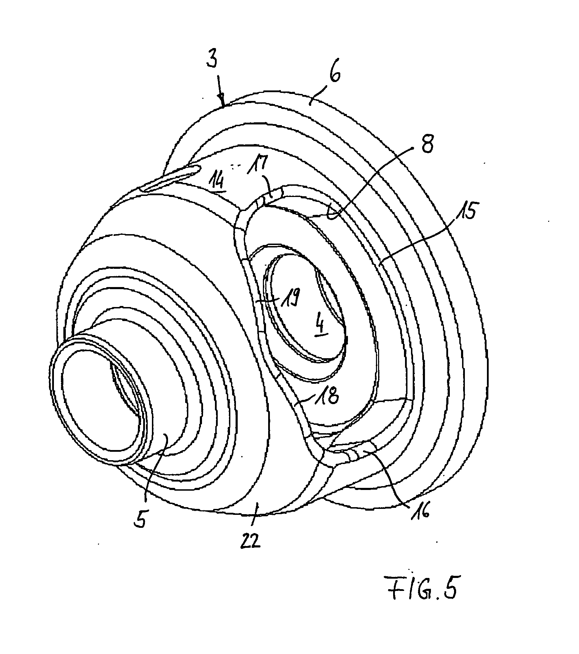

Die Figuren 3, 4 und 5 werden im folgenden gemeinsam beschrieben. Sie zeigen den Differentialkorb aus Figur 2, auf deren Beschreibung insofern bezug genommen wird. Es ist ersichtlich, daß in den in Umfangsrichtung zwischen den Öffnungen 8, 9 liegenden Stegen 14 radiale Bohrungen 23, 24 zur Aufnahme eines hier nicht dargestellten Zapfens vorgesehen sind. Der Zapfen wird nach dem Einsetzen der Ausgleichsräder durch diese durchgesteckt und gegenüber dem Differentialkorb mittels eines Sicherungsrings, der in eine Ringnut 25 in der Bohrung 24 eingreift, axial gesichert. Durch die hülsenförmigen Lageransätze werden die hier nicht dargestellten Seitenwellen eingesteckt und mit den Seitenwellenrädern fest verbunden.

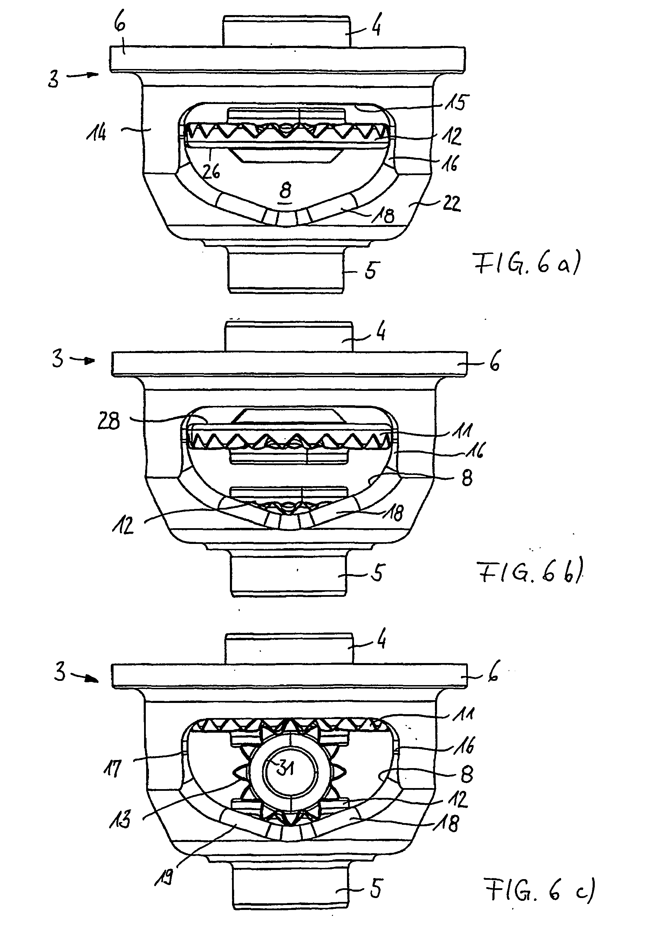

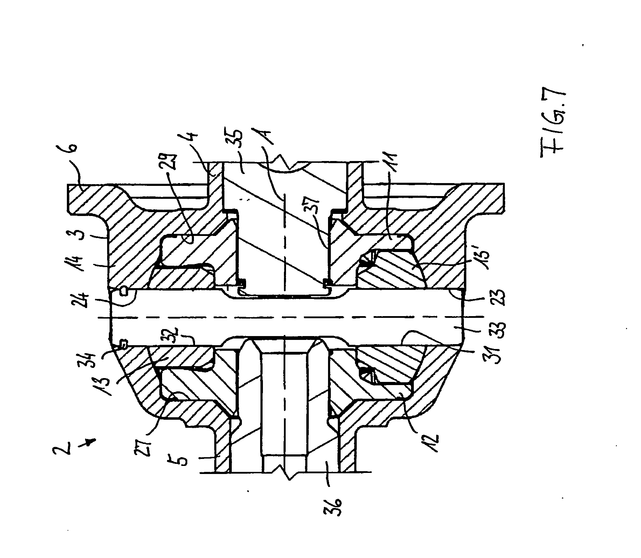

Die Figuren 6 und 7 werden im folgenden gemeinsam beschrieben. Sie zeigen den Montageablauf in einen Differentialkorb nach den Figuren 2 bis 5, auf deren Beschreibung insofern bezug genommen wird. Wie aus Figur 6a hervorgeht, wird zunächst das zum Flansch 6 entfernt liegende Seitenwellenrad 12 in die Öffnung 8 eingeführt und axial verschoben, bis es mit seiner radialen Anlagefläche 26 gegen eine Stützfläche 27 im Differentialkorb 3 oder eine Anlaufscheibe in Kontakt ist. Danach wird das benachbart zum Flansch liegende Seitenwellenrad 11 in die Öffnung 8 eingeführt und mit seiner Anlagefläche 28 gegen eine Stützfläche 29 im Differentialkorb 3 oder eine Anlaufscheibe in Anlage gebracht, Figur 6b). Anschließend werden die beiden Ausgleichsräder 13 durch die Öffnung 8 bzw. die Öffnungen 9 in den Differentialkorb 3 eingeführt und mit den beiden Seitenwellenrädern 11, 12 in Verzahnungseingriff gebracht, was in Figur 6c) gezeigt ist. Im nächsten Schritt wird der Differentialrädersatz 11, 12, 13 um 90° um die Drehachse gedreht, so daß die Bohrungen 31, 32 der Ausgleichsräder 13 mit den radialen Durchbrüchen 23, 24 im Differentialkorb fluchten. Dann kann der Zapfen 33 in Bohrungen 31, 32 eingesteckt werden und mittels eines Sicherungsrings 34 im Differentialkorb 3 axial gesichert werden. Die fertig montierte Differentialanordnung 2 ist in Figur 7 gezeigt. Hier sind auch die Seitenwellen 35, 36 dargestellt, die jeweils über eine Längsverzahnung 37, 38 drehfest mit dem zugehörigen Seitenwellenrad 11, 12 verbunden und axial gesichert ist. Die Differentialanordnung 2 ist als Kronenraddifferential gestaltet, wobei die Seitenwellenräder 11, 12 Kronenräder und die Ausgleichsräder 13 Stirnräder sind. Kronenraddifferentiale haben den Vorteil einer besonders kurzen axialen Baulänge.

### Bezugszeichenliste

- 2: Differentialanordnung
- 3: Differentialkorb
- 4: Lageransatz
- 5: Lageransatz
- 6: Flansch
- 7: Mantelabschnitt
- 8: Öffnung
- 9: Öffnung
- 11: Seitenwellenrad
- 12: Seitenwellenrad
- 13: Ausgleichsrad
- 14: Steg
- 15: Basisfläche
- 16: Seitenfläche
- 17: Seitenfläche
- 18: Stirnfläche
- 19: Stirnfläche
- 21: Scheitel
- 22: konischer Abschnitt
- 23: Durchbruch
- 24: Durchbruch
- 25: Ringnut
- 26: Anlagefläche
- 27: Stützfläche
- 28: Anlagefläche
- 29: Stützfläche
- 31: Bohrung
- 32: Bohrung
- 33: Zapfen
- 34: Sicherungsring
- 35: Seitenwelle
- 36: Seitenwelle
- 37: Längsverzahnung
- 38: Längsverzahnung

- A: Drehachse
- D: Durchmesser
- L: Länge
- R: Radius

## Patentansprüche

1. Differentialanordnung in Form eines Kronenraddifferentials, insbesondere für den Einsatz im Antriebsstrang eines Kraftfahrzeugs, umfassend
einen einteiligen Differentialkorb (3), der um eine Drehachse drehend antreibbar ist und in einem Mantelabschnitt (7) genau zwei gleiche Öffnungen (8, 9) zur Montage von Seitenwellenrädern (11, 12) und Ausgleichsrädern (13) aufweist, die jeweils eine Drehachse aufweisen;
wobei die Seitenwellenräder (11, 12) im montierten Zustand im Differentialkorb (3) auf der Drehachse (A) drehbar gehalten sind und wobei die Ausgleichsräder (13) gemeinsam mit dem Differentialkorb (3) um die Drehachse (A) umlaufen und mit den Seitenwellenrädern (11, 12) in Verzahnungseingriff sind;
wobei die Öffnungen (8, 9) in Bezug auf eine Längsmittelebene jeweils spiegelsymmetrisch gestaltet sind und eine axiale Länge (L1) haben, die zumindest dem Durchmesser der Ausgleichsräder (13) entspricht und eine größte Umfangserstreckung (L2) in Radialansicht haben, die zumindest einer kleinsten Außendiagonalen der Seitenwellenräder (11, 12) entspricht,
**dadurch gekennzeichnet,**
**daß** die Seitenwellenräder (11, 12) als Kronenräder und die Ausgleichsräder (13) als Stirnräder gestaltet sind und,
**daß** die Öffnungen (8, 9) in Bezug auf eine durch die jeweils eine Drehachse der Ausgleichsräder (13) und senkrecht zur Drehachse (A) aufgespannte Querschnittsebene unsymmetrisch gestaltet sind.

2. Differentialanordnung nach Anspruch 1,
**dadurch gekennzeichnet,**
**daß** die Öffnungen (8, 9) derart gestaltet sind, daß die Seitenwellenräder (11, 12) mit ihren jeweiligen Achsen etwa parallel zur Drehachse (A) ausgerichtet durch die Öffnungen (8, 9) eingeführt werden können.

3. Differentialanordnung nach Anspruch 1 oder 2,
**dadurch gekennzeichnet,**
**daß** die Öffnungen (8, 9) derart gestaltet sind, daß die Ausgleichsräder (13) mit ihren jeweiligen Achsen etwa senkrecht zur Drehachse (A) ausgerichtet durch die Öffnungen (8, 9) eingeführt werden können.

4. Differentialanordnung nach einem der Ansprüche 1 bis 3,
**dadurch gekennzeichnet,**
**daß** die Umfangserstreckung (L2) der Öffnungen (8, 9) in Radialansicht größer ist als deren axiale Länge (L).

5. Differentialanordnung nach einem der Ansprüche 1 bis 4,
**dadurch gekennzeichnet,**
**daß** die axiale Länge (L1) der Öffnungen (8, 9) höchstens dem 1,1-fachen des Durchmessers (D2) der Ausgleichsräder (13) entspricht, und
**daß** die größte Umfangserstreckung (L2) in Radialansicht höchstens dem 1,1-fachen Durchmesser (D1) der Seitenwellenräder (11, 12) entspricht.

6. Differentialanordnung nach einem der Ansprüche 1 bis 5,
**dadurch gekennzeichnet,**
**daß** die Öffnungen (8, 9) jeweils in Form eines Vielecks gestaltet sind.

7. Differentialanordnung nach Anspruch 6,
**dadurch gekennzeichnet,**
**daß** die Öffnungen (8, 9) jeweils in Form eines Fünfecks, insbesondere mit abgerundeten Ecken, gestaltet sind.

8. Differentialanordnung nach Anspruch 7,
**dadurch gekennzeichnet,**
**daß** das Fünfeck in Radialansicht eine Basisfläche (15), zwei im wesentlichen parallel zur Drehachse (A) verlaufende Seitenflächen (16, 17) und zwei gegenüber der Drehachse (A) winklig angestellte Stirnflächen (18, 19) aufweist.

9. Differentialanordnung nach einem der Ansprüche 1 bis 8,
**dadurch gekennzeichnet,**
**daß** der Differentialkorb (3) einen Flansch (6) zur Drehmomenteinleitung aufweist, wobei die Basisfläche (15) axial benachbart zum Flansch (6) angeordnet ist.

10. Differentialanordnung nach einem der Ansprüche 8 oder 9,
**dadurch gekennzeichnet,**
**daß** ein erster Übergangsbereich zwischen den Stirnflächen (18, 19) durch einen ersten Radius (R1) gebildet wird, der etwa dem Radius der Ausgleichsräder (13) entspricht.

11. Differentialanordnung nach einem der Ansprüche 8 bis 10,
**dadurch gekennzeichnet,**
**daß** zweite Übergangsbereiche zwischen den Stirnflächen (18, 19) und den Seitenflächen (16, 17) durch zweite Radien (R2) gebildet sind, die jeweils maximal dem Radius der Ausgleichsräder (13) entsprechen.

12. Differentialanordnung nach Anspruch 11,
**dadurch gekennzeichnet,**
**daß** dritte Übergangsbereiche zwischen den Seitenflächen (16, 17) und der Basisfläche (15) durch dritte Radien (R3) gebildet werden, die kleiner sind als die zweiten Radien (R2) zwischen den Seitenflächen (16, 17) und der Basisfläche (15).

13. Differentialanordnung nach einem der Ansprüche 1 bis 12,
**dadurch gekennzeichnet,**
**daß** genau zwei einander diametral gegenüberliegende Öffnungen (8, 9) vorgesehen sind.

14. Differentialanordnung nach einem der Ansprüche 1 bis 13,
**dadurch gekennzeichnet,**
**daß** der Differentialkorb (3) im Mantelabschnitt (7) in Umfangsrichtung zwischen den beiden Öffnungen (8, 9) liegende radiale Durchbrüche (23, 24) zur Aufnahme eines Zapfens (33) aufweist.

15. Differentialanordnung nach Anspruch 14,
**dadurch gekennzeichnet,**
**daß** genau zwei Ausgleichsräder (13) vorgesehen sind, die auf einem gemeinsamen Zapfen (33) gelagert sind, der in die Durchbrüche (23, 24) eingesteckt ist.

## Claims

1. A differential assembly in the form of a crown gear differential, more particularly for being used in the driveline of a motor vehicle, comprising
a one-piece differential carrier (3) which is rotatably drivable around an axis of rotation and which, in a casing portion (7), comprises exactly two identical openings (8, 9) for mounting sideshaft gears (11, 12) and differential gears (13) which each comprise an axis of rotation;
wherein the sideshaft gears (11, 12), in the mounted condition of the differential carrier (3), are rotatably held on the axis of rotation (A), and
wherein the differential gears (13) rotate jointly with the differential carrier (3) around the axis of rotation (A) and engage the sideshaft gears (11, 12);
wherein, with reference to a longitudinal central plane, the openings (8, 9) are designed so as to be mirror-symmetric and comprise an axial length (L1) which at least corresponds to the diameter of the differential gears (13) and, a radial view, comprise a greatest circumferential extension (L2) which at least corresponds to a smallest outer diagonal of the sideshaft gears (11, 12),
**characterised in**
**that** the sideshaft gears (11, 12) are provided in the form of crown gears and the differential gears (13) in the form of spur gears and
**that**, with reference to a cross-sectional plane formed by the respective axis of rotation of the differential gears (13) and extending perpendicularly to the axis of rotation (A), the openings (8, 9) are designed so as to be asymmetric.

2. A differential assembly according to claim 1,
**characterised in**
**that** the openings (8, 9) are designed in such a way that the sideshaft gears (11, 12) can be introduced through the openings (8, 9), with their respective axes being aligned so as to extend approximately parallel to the axis of rotation (A).

3. A differential assembly according to claim 1 or 2,
**characterised in**
**that** the openings (8, 9) are designed in such a way that the differential gears (13) can be introduced through the openings (8, 9), with their respective axes being aligned approximately perpendicularly relative to the axis of rotation (A).

4. A differential assembly according to any one of claims 1 to 3,
**characterised in**
**that**, in a radial view, the circumferential extension (L2) of the openings (8, 9) is greater than their axial length (L) of same.

5. A differential assembly according to any one of claims 1 to 4,
**characterised in**
**that** the axial length (L1) of the openings (8, 9) at most corresponds to 1.1 times the diameter (D2) of the differential gears (13) and
**that**, in a radial view, the greatest circumferential extension (L2) at most corresponds to 1.1 times the diameter (D1) of the sideshaft gears (11, 12).

6. A differential assembly according to any one of claims 1 to 5,
**characterised in**
**that** the openings (8, 9) are each designed in the shape of a polygon.

7. A differential assembly according to claim 6,
**characterised in**
**that** the openings are each designed in a form of a pentagon, more particularly with rounded corners.

8. A differential assembly according to claim 7,
**characterised in**
**that**, in a radial view, the pentagon comprises a base face (15), two side faces (16, 17) extending substantially parallel to the axis of rotation (A) and two end faces (18, 19) extending at an angle relative to the axis of rotation (A).

9. A differential assembly according to any one of claims 1 to 8,
**characterised in**
**that** the differential carrier (3) comprises a flange (6) for the introduction of torque, wherein the base face (15) is arranged so as to axially adjoin the flange (6).

10. A differential assembly according to any one of claims 8 or 9,
**characterised in**
a first region of transition between the end faces (18, 19) is formed by a first radius (R1) which approximately corresponds to the radius of the differential gears (13).

11. A differential assembly according to any one of claims 8 to 10,
**characterised in**
**that** second regions of transition between the end faces (18, 19) and the side faces (16, 17) are formed by second radii (R2) which, in their maximum extension, correspond to the radius of the differential gears (13).

12. A differential assembly according to claim 11,
**characterised in**
**that** third regions of transition between the side faces (16, 17) and the base face (15) are formed by third radii (R3) which are smaller than the second radii (R2) between the side faces (16, 17) and the base face (15).

13. A differential assembly according to any one of claims 1 to 12,
**characterised in**
**that** there are provided exactly two diametrically opposed openings (8, 9).

14. A differential assembly according to any one of claims 1 to 13,
**characterised in**
**that**, in the casing portion (7), the differential carrier (3) comprises radial through-apertures (23, 24) for receiving a journal (33), which radial through-apertures (23, 24) are positioned in the circumferential direction between the two openings (8, 9).

15. A differential assembly according to claim 14,
**characterised in**
**that** there are provided exactly two differential gears (13) which are supported on a common journal (33) which is inserted into the apertures (23, 24).

## Revendications

1. Agencement de différentiel sous la forme d'un différentiel à roues de chant, notamment destiné à l'utilisation dans la ligne de transmission d'entraînement d'un véhicule automobile, comprenant
une cage de différentiel (3) d'un seul tenant, qui peut être entraînée en rotation autour d'un axe de rotation, et présente, dans un tronçon d'enveloppe périphérique (7), exactement deux ouvertures identiques (8,9) pour le montage de roues planétaires d'arbres latéraux (11, 12) et de roues satellites (13) présentant chacune un axe de rotation ;
la configuration de l'agencement étant la suivante :
à savoir que dans l'état monté, les roues planétaires d'arbres latéraux (11, 12) sont maintenues tournantes dans la cage de différentiel (3) sur l'axe de rotation (A), et les roues satellites (13) tournent en commun avec la cage de différentiel (3) autour de l'axe de rotation (A) et sont en prise d'engrènement avec les roues planétaires d'arbres latéraux (11, 12) ;
et à savoir que les ouvertures (8, 9) sont chacune d'une configuration symétrique par rapport à un plan médian longitudinal, et présentent une longueur axiale (L1), qui correspond au moins au diamètre des roues satellites (13), et présentent une étendue périphérique (L2) la plus grande en vue radiale, qui correspond au moins à une diagonale extérieure la plus petite des roues planétaires d'arbres latéraux (11, 12),
**caractérisé**
**en ce que** les roues planétaires d'arbres latéraux (11, 12) sont conçues sous forme de roues de chant, et les roues satellites (13) en tant que roues droites, et en ce que les ouvertures (8, 9) sont de configuration non symétrique par rapport à un plan de section transversale, qui passe par l'axe de rotation respectif des roues satellites (13) et est perpendiculaire à l'axe de rotation (A).

2. Agencement de différentiel selon la revendication 1,
**caractérisé**
**en ce que** les ouvertures (8, 9) sont d'une configuration telle que les roues planétaires d'arbres latéraux (11, 12) puissent être introduites à travers les ouvertures (8, 9), avec leurs axes respectifs orientés environ parallèlement à l'axe de rotation (A).

3. Agencement de différentiel selon la revendication 1 ou la revendication 2,
**caractérisé**
**en ce que** les ouvertures (8, 9) sont d'une configuration telle que les roues satellites (13) puissent être introduites à travers les ouvertures (8, 9), avec leurs axes respectifs orientés environ perpendiculairement à l'axe de rotation (A).

4. Agencement de différentiel selon l'une des revendications 1 à 3,
**caractérisé**
**en ce que** l'étendue périphérique (L2) des ouvertures (8, 9) en vue radiale est plus grande que leur longueur axiale (L1).

5. Agencement de différentiel selon l'une des revendications 1 à 4,
**caractérisé**
**en ce que** la longueur axiale (L1) des ouvertures (8, 9) correspond au plus à 1,1 fois le diamètre (D2) des roues satellites (13), et
**en ce que** l'étendue périphérique (L2) la plus grande en vue radiale correspond au plus à 1,1 fois le diamètre (D1) des roues planétaires d'arbres latéraux (11, 12).

6. Agencement de différentiel selon l'une des revendications 1 à 5,
**caractérisé**
**en ce que** les ouvertures (8, 9) sont chacune d'une configuration en forme de polygone.

7. Agencement de différentiel selon la revendication 6,
**caractérisé**
**en ce que** les ouvertures (8, 9) sont chacune d'une configuration en forme de pentagone, notamment avec des sommets arrondis.

8. Agencement de différentiel selon la revendication 7,
**caractérisé**
**en ce que** le pentagone présente en vue radiale, une surface de base (15), deux surfaces latérales (16, 17), qui s'étendent sensiblement de manière parallèle à l'axe de rotation (A), et deux surfaces frontales (18, 19) inclinées angulairement par rapport à l'axe de rotation (A).

9. Agencement de différentiel selon l'une des revendications 1 à 8,
**caractérisé**
**en ce que** la cage de différentiel (3) comporte un flasque (6) destiné à lui fournir un couple de rotation, la surface de base (15) étant agencée axialement au voisinage du flasque (6).

10. Agencement de différentiel selon l'une des revendications 8 ou 9,
**caractérisé**
**en ce qu'**une première zone de transition entre les surfaces frontales (18, 19) est formée par un premier rayon (R1), qui correspond environ au rayon des roues satellites (13).

11. Agencement de différentiel selon l'une des revendications 8 à 10,
**caractérisé**
**en ce que** des deuxièmes zones de transition entre les surfaces frontales (18, 19) et les surfaces latérales (16, 17) sont formées par des deuxièmes rayons (R2), qui correspondent chacun au maximum au rayon des roues satellites (13).

12. Agencement de différentiel selon la revendication 11,
**caractérisé**
**en ce que** des troisièmes zones de transition entre les surfaces latérales (16, 17) et la surface de base (15) sont formées par des troisièmes rayons (R3), qui sont plus petits que les deuxièmes rayons (R2) entre les surfaces latérales (16, 17) et les surfaces frontales (18, 19).

13. Agencement de différentiel selon l'une des revendications 1 à 12,
**caractérisé**
**en ce que** sont prévues exactement deux ouvertures (8, 9) diamétralement opposées.

14. Agencement de différentiel selon l'une des revendications 1 à 13,
**caractérisé**
**en ce que** la cage de différentiel (3) présente dans le tronçon d'enveloppe périphérique (7), des passages (23, 24) d'orientation radiale, qui sont situés, en direction périphérique, entre les deux ouvertures (8, 9), et sont destinés à recevoir un tourillon (33).

15. Agencement de différentiel selon la revendication 14,
**caractérisé**
**en ce que** sont prévues exactement deux roues satellites (13), qui sont montées sur un tourillon commun (33) emmanché dans lesdits passages (23, 24).
